# EUROPEAN PATENT APPLICATION

(11) **EP 2 048 666 A1**
(43) Date of publication of application: **15.04.2009**
(21) Application number: 08105560.0
(22) Date of filing: 13.10.2008
(51) Int. Cl.: G11B 27/034

(54) **System and Method of automatically creating a multi/hybrid multimedia storage medium**

(30) Priority: 12.10.2007 US 979691 P
(71) Applicant: MAGIX AG, 10117 Berlin (DE)
(72) Inventor: Herberger, Tilman, 01219, Dresden (DE); Tost, Titus, 01219, Dresden (DE)

(57) **Abstract**

There is provided herein a system and method for automatically creating a multi-version/hybrid storage medium for storage of a plurality of different output versions from digital high definition source material on one storage medium. In the preferred embodiment, the instant invention will create the storage medium without the interaction of the user and will additionally ensure that the specific output versions are created with the best possible quality.

## Description

### FIELD OF THE INVENTION

The present invention relates generally to the field of editing and displaying digital photo and video material. More particularly, but not by way of limitation, the present invention relates to the subject matter of storage, retrieval, and performance of multimedia works.

### BACKGROUND OF THE INVENTION

Photo and video editing in a personal computing environment continues to enjoy rising popularity among end users. One reason for this is the ever-increasing digitalization of both technologies. Of course, advances in imaging and other technologies have also played its role. For example in the area of photography, digital cameras have superseded the analog technology of film-based cameras, at least in the consumer market. More recently, this development has been extended into the realm of professional photography, where digital reflex cameras have come to replace more and more of the analog reflex cameras traditionally used by professional photographers. Among the reasons, for the growing popularity of digital cameras, are that digital photos are available for review and printing almost immediately and, if not satisfactory, can be re-shot or edited as needed. Another reason is that, in many situations, digital photos can result in better images than analog photos, and that is especially so in cases where the resolution of a digital photo approaches or exceeds that of an analog one.

In the video arena, new technologies (e.g., high definition "HD") have been slower in gaining widespread acceptance. In recent years, only a few innovations of this sort have found their way into the consumer market, belated adoption of a single high definition video storage format being one. In both the photo and video areas, technology is trending toward higher resolution devices.

However, as high definition video has begun to appear in the consumer market, it has created new problems for the consumer who wishes to utilize it. In more particular, although high definition cameras are increasingly available, not every editing program is able to accept HD files nor is every display device prepared to display them.

Of course, the ability to collect and edit high-resolution material is only the first step in producing a multimedia work that others will be able to view and enjoy. Equally important is the ability of the target user to view the final product. There are, of course, two broad concerns. First, whether the file reader / multimedia player (e.g., a DVD player) can read data of the sort written previously to disk and, second, whether the display device can reproduce the information stored on the disk (e.g., can the display device accommodate high-resolution data).

Of additional concern - and one that is increasingly important given the global reach of the Internet - are regional differences in video standards. In North America and Japan, the use of high definition TVs is widespread. Wherein, in Europe standard definition TVs are still in the majority, although the trend is pointing toward increased sales of devices that can display HD material. It is estimated that only about 20% to 25% of TVs in use are high definition, including projectors, plasma TVs, LCD TVs, etc.

Additionally most users in North America, Japan and/or Europe own personal computers which are typically able to display high definition material on an attached monitor. However, the personal computer is still largely viewed as a work device and, therefore, the use of a personal computer in the living room may not be an attractive option for some users. Additionally, the display devices coupled to the personal computer are usually smaller in size as compared with the typical living room TV.

Thus, the problem that confronts the creator of video material is which of many possible formats should be used when the completed work is written to a DVD disk or other removable media suitable for distribution to the public. Of course, the user could choose to output a standard resolution product, but the reduction in resolution will be significant. For example, a high definition digital photo features a resolution of up to, for example, 3648 x 2736 pixels but an NTSC or PAL compatible standard definition version requires downsizing the digital photo to a resolution of 720 x 576 pixels (PAL) or 720 x 480 pixels (NTSC). Among the problems that will confront the user in this scenario include:
- Quality loss when material is created to be compatible with lower resolution devices, the quality loss being less when the output format is HD;
- The effort required to prepare and store on different media perhaps as many as three or more versions of the work (for example: standard definition video, high definition video, and the original full-resolution source material);
- The costs associated with creating multiple versions of a work and writing multiple file formats to output; and
- The training required to make the user conversant with the sometimes complex industry standards associated with HD video and standard definition video, and when each should be used.

One consequence of the complexity of the foregoing is that users will predictably experience frustration when, for example, source material that looks sharp and crisp on a computer monitor is clearly of lesser quality when viewed on a standard definition TV. Similarly, the user may be disappointed when material that was encoded for a standard definition display device is displayed on a HD device (e.g., where a user upgrades to a new HD ready computer after preparing a standard definition video work). Further tending to frustrate the user is the fact that in the event of such an upgrade it may be difficult or impossible to recreate the work in HD because some or all of the source files will have been deleted after the standard definition work was completed.

Thus what is needed is a method that eliminates the above mentioned problems and annoyances for the user - a method that features a future proof storage option for a user. What is further needed is an invention that reduces the training effort for the user and which reduces the potential cost associated with creating output material containing high resolution source material. Additionally the invention should help a user prepare multimedia works from input data of different resolutions that is suitable for viewing at a variety of different resolutions.

Accordingly it should now be recognized, as was recognized by the present inventors, that there exists, and has existed for some time, a very real need for a system and method that would address and solve the above-described problems.

Before proceeding to a description of the present invention, however it should be noted and remembered that the description of the invention which follows, together with the accompanying drawings, should not be construed as limiting the invention to the examples (or preferred embodiments) shown and described. This is so because those skilled in the art to which the invention pertains will be able to devise other forms of the invention within the ambit of the appended claims.

### SUMMARY OF THE INVENTION

There is provided herein a system and method for automatically creating a multi version/hybrid data medium, for use with high definition source material. The instant method is designed to reduce the quality loss that is usually associated with working on high definition source material in a multimedia project. It additionally features a more cost-effective approach to the editing and storing of material created from high definition source material than prior art approaches. The system and method is primarily intended for use in the multimedia editing market and is generally directed to providing output versions of HD source materials that are created in consideration of the device on which they will be displayed. The instant system will allow the user to quickly and easily create multi-format storage media that frees the user from the need to explicitly understand the display capabilities of particular display devices.

In brief, the instant invention will enable a user to create a multi-format data media that will preferably contain a standard definition version, a high definition version, and the source material of a multimedia work on a single storage medium. Preferably, the process will be incorporated into the usual workflow associated with editing high definition material and storing the work product for subsequent viewing. The instant invention will preferably feature automatic storage of the work product on a selected storage medium in the format preferred by the user. Additionally, the invention will preferably feature an automatic generation and storage of the work product in a second (or third, etc.) format. Preferably, these steps will be performed automatically but, in the event that problems or errors are encountered, the user may be consulted.

According to a preferred embodiment, the instant invention will preferably begin at the point where the user has created a project within a video editing program using some amount of the high definition source material and is ready to render and write the project to a storage medium. The process of the instant invention will preferably be integrated into the general workflow of editing digital media material using an editing application, which is well known to one of ordinary skill in the art.

In a next preferred step, the instant invention will determine the format of the output material, for example if the user desires to output the edited source in standard (or high) definition, that fact will be noted. Note that it will be generally assumed herein that HD source material of some sort is available to the user and has been incorporated into the work. This source material might be audio/video clips in HD quality, digital still images, high resolution graphics, etc. In the next step, the storage requirements or the size of the available output material will be determined. This will preferably be achieved by an analysis of the file size of the output material or, when the output material is not available as a single file, the storage requirements of the various components of that file (e.g., the audio and video components) will be determined and summed to calculate the total storage requirements of the output material.

In the next preferred step of the instant invention, the total storage capacity of the selected storage medium will be determined. Next, the instant invention will determine if another version of the project is available on the user's personal computer or other accessible storage. For example, if the user has specified the multimedia work is to be formatted for a standard resolution display, the instant invention will search for a high definition version of same that might have been created previously by the user. Similarly, if the user has produced a high definition work, the instant invention will search for a corresponding low resolution (standard) version.

If an alternative version can be found, the instant invention will preferably determine the space/storage requirement of the user's initial version, and the alternative version, and the total space required to store both. Next, the total storage need will preferably be compared with the capacity of the user selected storage medium. If the comparison shows that the storage capacity of the storage medium permits both versions of the output material to be stored, preferably the instant invention will next determine the storage requirement of the source material. If the comparison indicates that both versions of the output material will not fit on the storage medium, the user will preferably receive a notification that the storage is inadequate and the instant invention, instead of storing both versions of the selected medium, will instead go on to the next step.

In the next preferred step, the source data items (e.g., video clips, digital photos, audio, etc.) from which the work was constructed will be examined to determine their total storage requirements. The total storage for these items will be added to the storage requirement of both versions of the project to determine if all three will fit on the storage medium. Again, this will be determined by reference to the storage capacity of the medium.

If the previous comparison indicates that all of the above will not fit onto the storage medium, the instant invention will notify the user of that fact and will not include the source material. However if the comparison reveals that the source material will also fit onto the storage medium, in a next preferred step, the versions of output material that have been selected will be stored on the storage medium.

The above-described process can potentially result in the creation of storage media of at least four different sorts: a disk (or other storage medium) on which only one output version is contained (the user's initial version), a disk that contains two output versions (the user's initial version and a second version or the user's version and the source material), and a disk that contains all three variations (the user's version, a second available version, and the source material).

In another preferred arrangement, a more elaborate variation of the instant invention will automatically create the alternative output versions taking into account the capacity of the storage medium.

It should be clear that an approach such as this would be a tremendous aid to the user who works with digital high definition source material and is confronted with the problem of preparing that material for viewing on different display devices of varying resolution. The instant invention provides the user with a hybrid storage medium which includes two or more different formats of output material. The instant invention will preferably be an automatic addition to the workflow typically encountered when working with digital source material. The invention will preferably be designed to be easily usable for a novice and will handle the details of formatting the output to be viewed at the desired resolution. The instant invention will create a storage medium which is future proof in that it incorporates a standard definition version together with a second version that is high definition, as well as the source material on a single storage medium. This approach is also more cost-effective than the prior art because at least three different versions of the project will preferably be fit on a single medium (e.g., disk) that will be suitable for performance on display devices of different resolution such that each version is shown at the best resolution.

The foregoing has outlined in broad terms the more important features of the invention disclosed herein, so that the detailed description that follows may be more clearly understood, and so that the contribution of the instant inventors to the art may be better appreciated. The instant invention is not limited in its application to the details of the construction and to the arrangements of the components set forth in the following description or illustrated in the drawings. Rather the invention is capable of other embodiments and of being practiced and carried out in various other ways not specifically enumerated herein. Additionally, the disclosure that follows is intended to apply to all alternatives, modifications and equivalents as may be included within the spirit and the scope of the invention as defined by the appended claims. Further, it should be understood that the phraseology and terminology employed herein are for the purpose of description and should not be regarded as limiting, unless the specification specifically so limits the invention. Further objects, features and advantages of the present invention will be apparent upon examining the accompanying drawings and upon reading the following description of the preferred embodiments.

### BRIEF DESCRIPTION OF THE DRAWINGS

Figure **1** depicts the general environment of the instant invention.

Figure **2** illustrates the different variants of display devices and their typical resolutions.

Figure **3** depicts the graphical user interface of a typical multimedia editing application of the sort that could be used in conjunction with the instant invention.

Figure **4** illustrates a preferred graphical user interface of the instant invention as it might appear when informing the user about the specifics of the storage process.

Figure **5** depicts the storage information page of the graphical user interface as it might appear when considering the original work, an alternative format, and the source materials.

Figure **6** illustrates how the graphical user interface of the instant invention might appear when the selection of output material exceeds the storage capacity.

Figure **7** contains a flowchart which illustrates some preferred steps of the instant invention.

Figure **8** contains a flowchart which illustrates another preferred aspect of the instant invention.

Figure **9** illustrates a flowchart of the instant invention which operates without user interaction.

Figure **10** depicts the prior art work flow of a user who seeks to store two different versions of the same work.

Figure **11** illustrates a preferred playback logic for use with the instant invention.

Figure **12** illustrates a graphical user interface of the instant invention that allows the user to define the specifics of the output material.

### DESCRIPTION OF THE PREFERRED EMBODIMENTS

Referring now to the drawings, wherein the reference numerals indicate the same parts throughout the several views, there is provided a preferred system and method for automatically creating a multi version/hybrid multimedia storage medium from digital high definition material. Additionally, the instant invention enables the user to create future proof storage media within the normal workflow context.

By way of general explanation and in accord with the preferred embodiment, it is to be understood that when the term " a "multi version/hybrid" storage medium is used herein that usage will preferably be interpreted as meaning storing at least two different versions of a multimedia project on a single storage medium, wherein the process of storing the different versions and deciding which versions to include on the storage medium is carried out preferably automatically without input from the user. The instant invention will preferably operate as an addition to the typical workflow of a high definition editing program and will be integrated into the processes associated with the storage of the project.

For purposes of the instant embodiment, it should be understood that the invention preferably seeks to simplify and speed up the process of creating stored multimedia from assorted high definition source materials. The instant invention will feature automatic integration of multiple versions of output material on a single storage device, depending on the storage capacity of the medium. The instant invention may operate in a fully automatic mode or be guided by the user. For example, in some preferred embodiments, the user will be allowed to set the output preferences in advance of executing the program. The preferred workflows and additional specifications regarding the instant invention will be described in greater detail below.

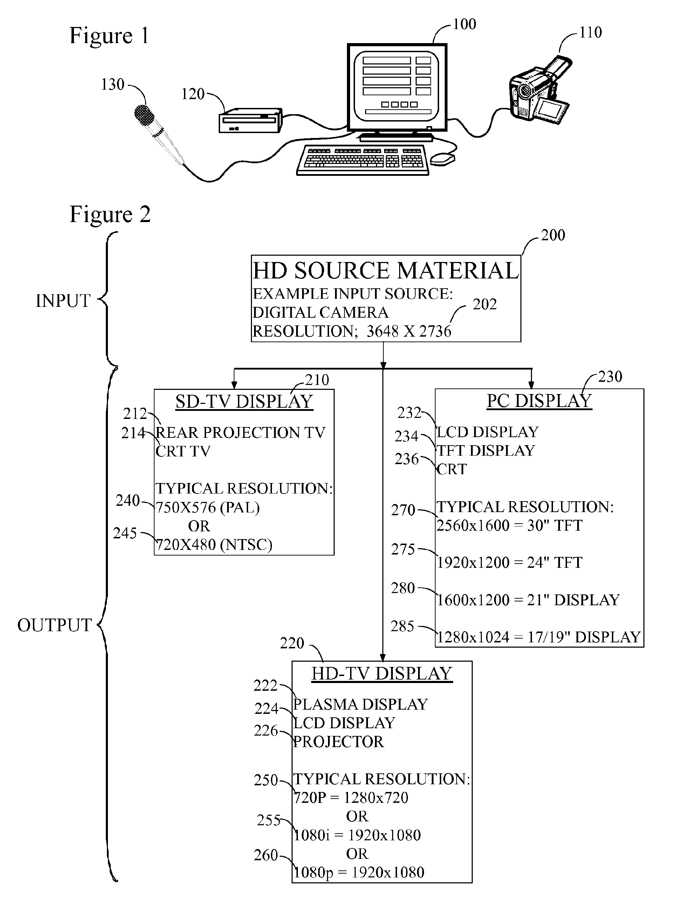

As is generally indicated in Figure 1, at least a portion of the instant invention will be implemented in the form of software running on a user's computer 100. Such a computer will have some amount of program memory and hard disk storage (whether internal or accessible via a network) as is conventionally utilized by such units.

Additionally it is possible that an external camera **110** of some sort will be utilized with - and will, preferably be connectible to - the computer so that video and/or graphic information can be transferred to and from the computer. Preferably, the camera **110** will be a digital video camera, although that is not a requirement, as it is contemplated that the user might wish to utilize still images from a digital still camera in the creation of his or her multimedia work. Further, given the modem trend toward incorporation of cameras into other electronic components (e.g., in handheld computers, telephones, laptops, etc.), those of ordinary skill in the art will recognize that the camera might be integrated into the computer or some other electronic device and, thus, might not be a traditional single-purpose video or still camera. Although the camera will preferably be digital in nature, any sort of camera might be used, provided that the proper interfacing between it and the computer is utilized. Additionally, a microphone **130** might be utilized so that the user can add voice-over narration to the multimedia work and a CD/DVD burner **120** could be useful for read and/or storing in-progress or completed works.

Turning next to Figure **2****,** this figure illustrates some popular output formats and different settings associated therewith. The user of digital photo cameras or digital high definition video cameras has a number of different source materials at his disposal **200,** wherein these source materials might have been created and stored at a variety of different resolutions. The exact values for the resolution of the high definition source material will depend on the type of the device which generated the material. For example, a digital camera with 7 megapixel CCD creates digital still images with a resolution of up to 3648 x 2736 pixels **202.** On the other hand, a typical HDV (High Definition Video) camcorder records data at 1080i which, when displayed, is scaled to an actual resolution of 1920 x 1080 pixels. The decision of how to convert the high definition source material will depend on the specific display device on which the user wishes to display the edited material. This, of course, will put the user in the difficult position of having to know the technical specifics (for example resolution) of his or her various display devices. Additionally, the user might wish to leave open the possibility that, although the HD cannot be currently displayed, a future hardware upgrade will make it possible to do so.

A number of different display devices might be available to the typical user. In Figure **2****,** these devices have been separated into display device types. For example, Figure **2** illustrates standard definition display devices **210,** high definition display devices **220,** and personal computer display devices **230.** Each of these display device types can typically display information at a variety of different resolutions. Rear projection TVs **212** and CRT TVs **214** are listed as standard definition display devices **210,** because these display devices can usually only reproduce material at resolutions of 720 x 576 pixels (PAL) **240** and 720 x 480 pixels (NTSC) **245.** According to the high definition standard, high definition display devices can display resolutions of 1280 x 720 pixels and can go up to a resolution of 1920 x 1080 pixels. Example high definition display devices **220** include plasma displays **222,** LCD displays **224,** projectors **226,** etc. These devices can usually reproduce a variety of different high definition resolutions, including several non-standard resolutions lying between the limits mentioned previously. The standard high definition resolutions that are usually supported by display devices are 720p (1280 x 720) **250,** 1080i (1920 x 1080 interlaced) **255** and 1080p (1920 x 1080 progressive) **260.** These potential differences show one obvious problem the user who intends to produce output material from high definition source material for devices found in the typical living room must confront, i.e., which resolution is the "best" one for the current project. Additionally, the array of choices further increases when the display capabilities of personal computer display devices **230** are considered. A multitude of different display devices can be connected to a personal computer, including, for example, LCD display devices **232,** TFT display devices **234,** CRT display devices **236,** etc. Depending on the type and size of the display device, the possible maximum resolution of these sorts of devices can vary significantly. For example, a 30" TFT **270** display device can display resolutions of up to 2560 x 1600 pixels, a 24" TFT **275** display device can display resolutions of up to 1920 x 1200 pixels, a 21" size display device **280** can display resolutions of up to 1600 x 1200 pixels, and a 17"/19" size display device **285,** can display resolutions of up to 1280 x 1024 pixels. These resolutions represent the recommended resolution for each size of display. Confronted with all these different possible resolutions and recommended resolutions, it should be clear why the user potentially will have trouble selecting the best resolution and format for a multimedia project.

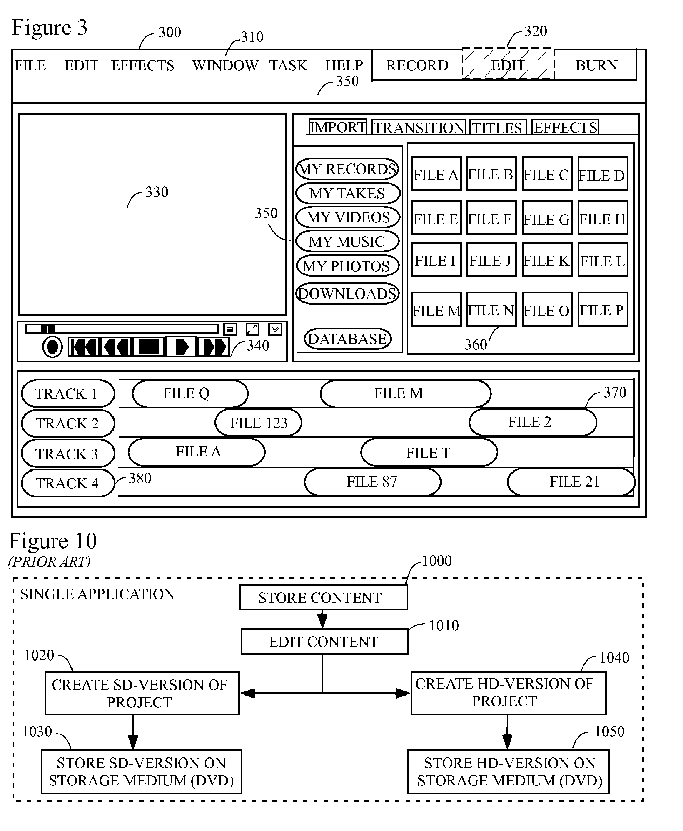

Now turning to Figure **3****,** this figure illustrates the graphical user interface of the sort encountered in a typical program used to edit digital source material, whether high definition or standard definition. A user will generally be presented with a computer screen display **300** which contains components of the sort indicated in this figure. For example, and as is typical for such editing programs, menu sections **310** will be provided to allow a user to interact with the underlying program and would typically provide for options that allow the user to browse and add new multimedia material into the multimedia work. Additionally, sections of the graphical user interface would allow the user to switch between different task sections of the underlying editing program. In the instant figure, the editing task has been selected **320,** resulting in the display of the illustrated graphical user interface. Additionally, it is typical in such programs to devote some portion of the screen to a view window **330,** wherein the multimedia work may be played during the time that it is being built and edited. On-screen transport controls **340** are preferably styled to resemble their counterparts on a conventional VCR and provide a way for the user to use a computer mouse to control playback of the multimedia work through the use of functions such as rewind, play, stop/record, fast forward etc. Those of ordinary skill in the art will recognize that such transport controls **340** are commonplace and well known in media editing programs.

In Figure **3****,** a section of the graphical user interface has been reserved for the integration and selection of new digital source material and application of video effects and transitions, insertion of titles into the multimedia work, etc. This section utilizes tabs **350** with which the user can define the display of selectable material in the corresponding display screen **360.** Additionally, the user will preferably be provided with a number of tracks **380,** wherein the contents of each track can be freely populated by the user. Usually the user will be expected to provide the data needed to fill at least one track with digital material **370,** wherein the composite arrangement of all tracks makes up the multimedia work in the end.

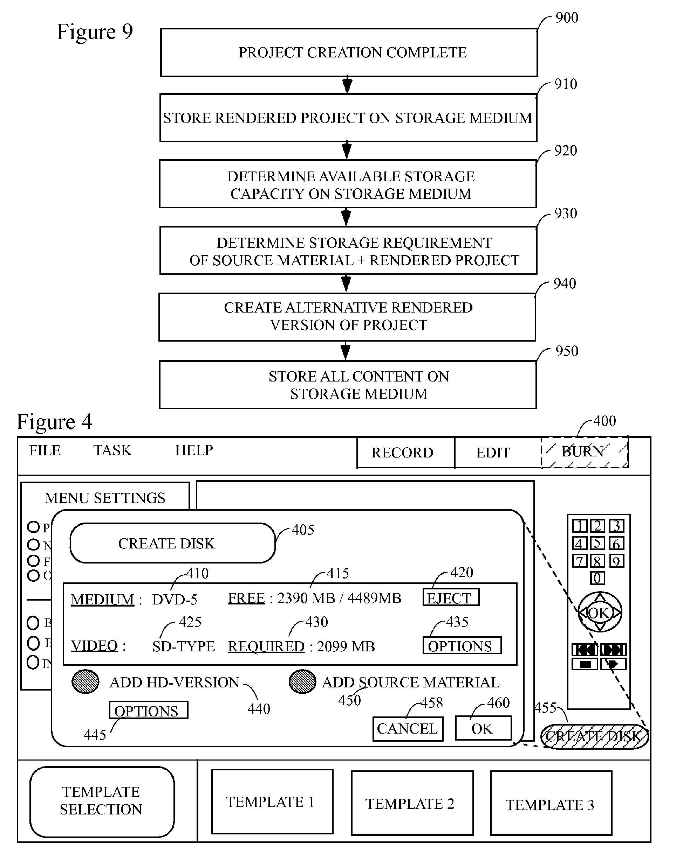

Figure **4** illustrates a preferred change in the graphical user interface when the user changes the task selection from the "EDIT" tab to the "BURN" **400** tab, thereby activating the instant invention. Selection of the "CREATE DISK" option will preferably present the user with a customized graphical user interface that allows him or her to control various aspects of the materials that are to be written to the output media. In response to the activation of this control, a part of the graphical representation of the instant invention will preferably be displayed to the user **405.** This graphical representation contains information useful for the user who wishes to create a multi version/hybrid storage medium according to the instant invention.

In more particular and as is illustrated in Figure **4****,** the user will be informed about the type of the storage medium **410** currently available (e.g., DVD, flash drive, memory card, etc.) and the current space available on the storage medium **415.** Additionally, the user will preferably be permitted to change **420** the currently inserted storage medium if the project size requires the use of a storage medium with a higher storage capacity. Additionally, the graphical interface will preferably display the type of output material **425** that is currently scheduled to be written to the storage medium and its space requirements **430.** This menu will additionally and preferably allow the user to change storage-specific options **435** (e.g., encoder settings etc.).

The user will preferably be able to instruct the instant invention to add other versions of the material originally prepared by the user to the storage medium. In the example of Figure **4****,** the user has opted to add a high definition version **440** of the original project and additionally is able to change options per menu item **445.** The user will preferably have the option to instruct the instant invention to add the source material to the storage medium **450** via the menu item provided. If the user is not satisfied with the selection or is uncertain about the proceedings he or she can choose to cancel the storage process **458,** however if the user is satisfied with the current selections he or she can activate the storage process by selecting the appropriate user control **460.**

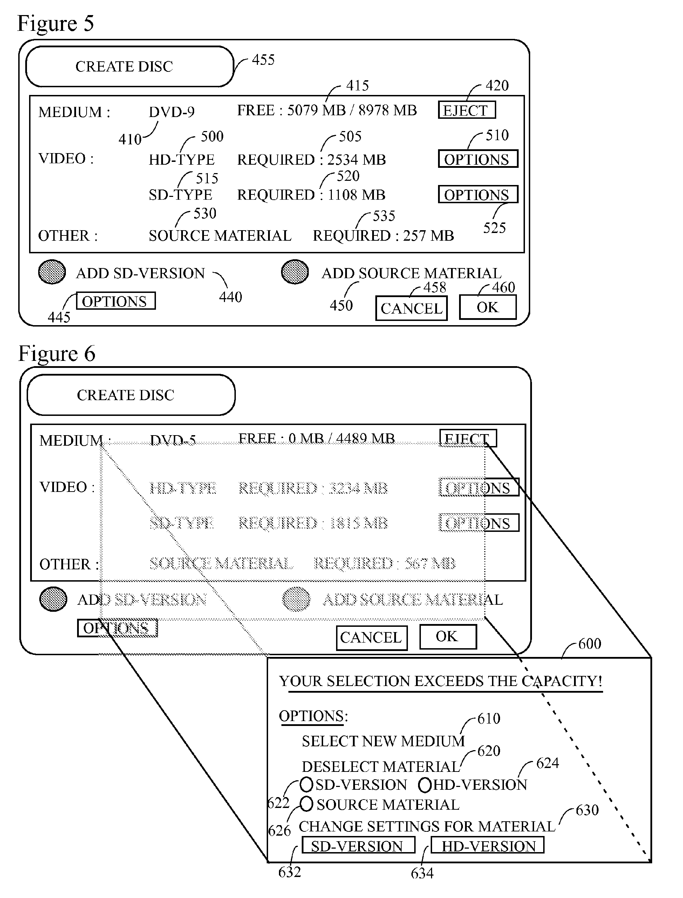

Figure **5** illustrates a magnified portion of the graphical user interface discussed previously in connection with Figure **4****.** This figure illustrates how the graphical user interface will preferably change when the user opts for the inclusion of potentially all three available versions of output material, thereby creating a multi version/hybrid storage medium. The graphical user interface will display the selected digital video versions of the output material **500, 515** and will also display the required storage capacity for each version **505, 520.** Additionally, and preferably, this same menu item will allow the user to change options associated with both digital video versions **510, 525.** The addition of the source material is also displayed in the graphical user interface **530** along with the display of the required storage capacity **535.** The information contained within this graphical user interface will preferably provide all of the information the user needs in order to create the multi version/hybrid storage medium. Note that, in the example of Figure **5****,** the storage medium has a capacity sufficient to include all three versions of the output material and so creation of a storage medium containing all three versions of the output material is an option.

Figure **6** shows the preferred graphical user interface of the instant invention storage process as it might appear when informing the user that a selection of output material exceeds the potential capacity of the storage medium **600.** The user will be presented with a number of options. He or she will be able to choose to select an alternative storage medium **610,** wherein with the selection of that option the instant invention will automatically eject the disc tray of the device (if the media is a CD or DVD) and allow the user to insert the new storage medium. As a second option, the user will be able to deselect some of the output material **620.** The deselection option includes the deselection of any (or all) of the versions of original material, the standard definition version **622,** the high definition version **624** and the source material **626.** With every deselection of an output version, the instant invention will preferably re-calculate the ratio of needed space for the versions of the output material and the available space on the storage medium. As a third option, the user will be able to choose to change settings **630** associated with the output material. These settings might include encoder values, output resolution etc. Preferably, the selection is separated into the change of options for the standard definition version **632** and the high definition version **634.**

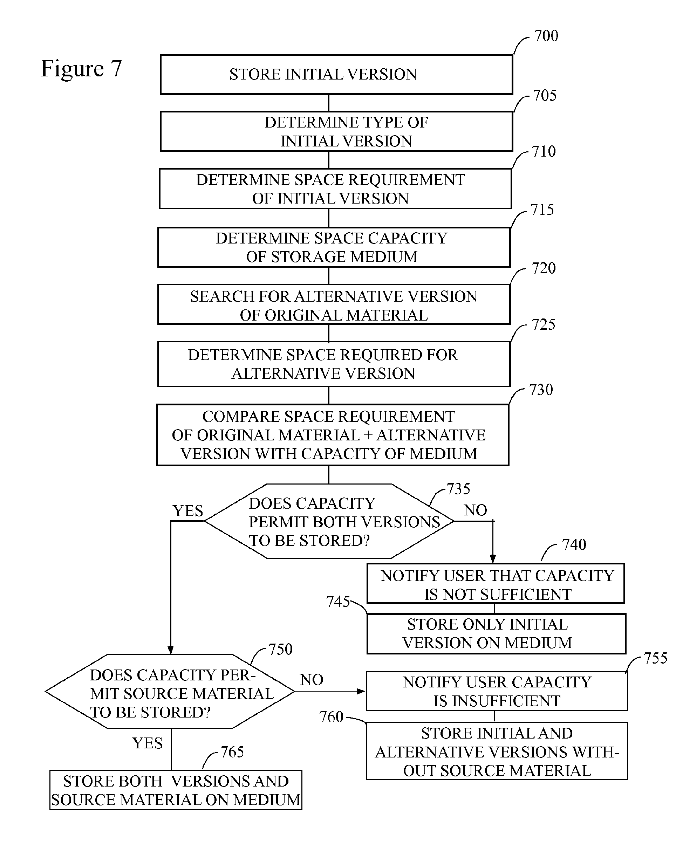

Figure **7** contains an overview of the preferred steps regarding the creation of the multi version/hybrid storage medium. The workflow illustrates the steps carried out by the instant invention when the two or more versions of the project are already available on the user's personal computer. The process starts with the decision to render the current project and store the initial version **700.** As a next preferred step, the instant invention will determine the media type of the initial version **705,** e.g., whether it is standard definition or high definition. Such a determination will usually be carried out by examination of its resolution. In a next preferred step, the instant invention will determine the space required to store the initial version **710** on the selected medium by checking the size of the file(s) representing the output material. The value that is obtained in that step will preferably be determined by the instant invention at run time or read from a database.

As a next preferred step, the instant invention will determine the storage capacity of the medium **715.** This value will preferably also be stored by the instant invention as a parameter value and will be used subsequently as discussed below. In a next preferred step, the instant invention will determine whether there is another version of the project stored on the user's disk or elsewhere **720.** That is, the instant invention will preferably look for a standard definition or high definition version of the project depending on the resolution of the initial version. The instant invention will preferably automatically look for alternative versions of the work in the folders and directories utilized by the underlying editing program.

As a next preferred step, the instant invention will determine the space requirement of the alternate version of the project **725.** As was described previously, because in the present example it is assumed that the different versions of project will already be available, the determination of the space requirement will preferably be carried out by checking the sizes of the initial and alternative versions **730.** This value will preferably be determined in real time. Alternatively, the storage requirements may be read from a previously compiled database of file sizes.

In the next preferred step, the instant invention will preferably use the file sizes to determine whether or not both versions may be stored on the selected output medium. As is suggested in Figure 7, the total space required will preferably be computed by adding together file sizes of the initial and alternative versions (step **730**). The total storage required will then be compared with the capacity of the disk to which it is to be written. In the next preferred step, the invention will potentially branch depending on whether or not both versions will fit onto the storage medium **735.** In event that the storage capacity is exceeded, the instant invention will preferably notify the user of that fact **740** and will remove the alternative version from the virtual "to-store" list **745.** The instant invention will then preferably proceed to the next step of the workflow, the same step to which the instant invention would proceed if the storage of both versions of output material had been possible.

In the next preferred step, the instant invention will preferably determine whether the source material will fit onto the storage medium **750.** This will preferably be done by determining the storage requirement of all of the files that comprise the source material. This will be compared to the remaining storage capacity of the storage medium. If that comparison shows that the source material will not fit, the instant invention will notify the user of that fact **755** and will not put the source material into the virtual "to-store" list **760** and, afterwards, the invention will preferably proceed to the next step wherein the instant invention will store the material on the storage medium according to the created virtual "to-store" list **765.**

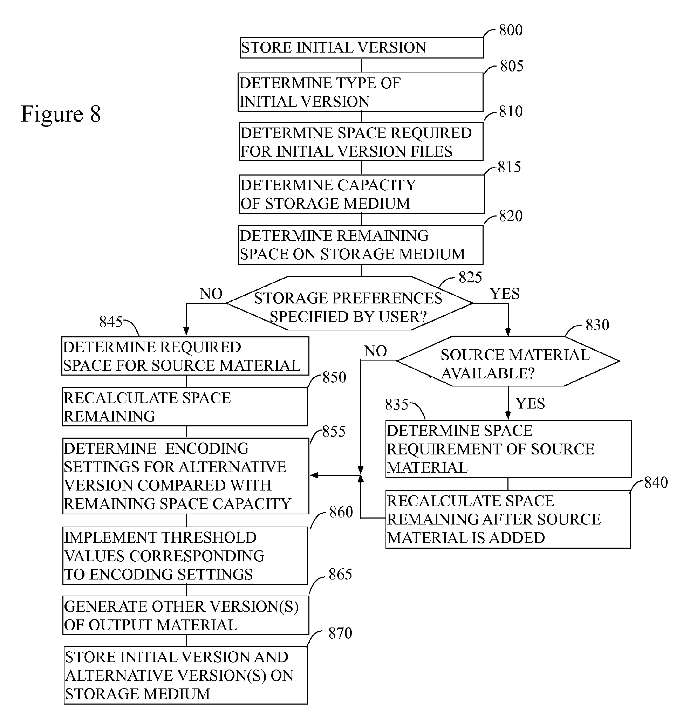

Figure **8** illustrates a preferred workflow of the instant invention wherein alternative versions of the current project are not available and need to be created on the fly by the instant invention. This preferred embodiment begins with the storage of an initial version **800**, which will be assumed to exist for purposes of this embodiment. The next steps are comparable to those described previously, wherein the instant invention will determine the type of the initial version **805** and afterwards will determine its storage requirements (step **810**). In the next preferred step, the instant invention will determine the total capacity of the storage medium **815** and the amount of storage remaining (step **820).** This will preferably be achieved by comparing the size of the initial version with the amount of space remaining on the storage device. In the next preferred step, the instant invention will determine if the user has previously specified any storage preferences (step **825).** If the user has previously specified the appropriate program preference, the instant invention will next determine if the user wishes to add the source material **830** to the storage medium. If the user has opted to add this material, the instant invention will determine its space requirements (step **835)** and will afterwards recalculate the space that remains available on the storage device **840.** On the other hand, if the user indicated that source material was not to be added (or such source material was not available), no recalculation of the space remaining will be necessary and the instant invention will proceed to a consideration of the encoding settings (step **855**) discussed below.

As a next preferred step, the instant invention will determine the space requirements of the source material **845** and in the next preferred step the instant invention will recalculate the free space on storage medium **850** to make certain that that source material and initial version will both fit on the output device.

In the next preferred step, the instant invention will determine encoding settings for the alternative version depending on the space remaining on the storage item **855.** These encoding settings might include, without limitation, bit rate, resolution, the preferred output format, etc. The instant invention will preferably utilize threshold values in the determination of the encoding settings **860.** These threshold values define ratios in terms of resolution and size of the target output material, in order to ensure that the output material will feature the best possible quality and still fit on the storage device.

In a next preferred step the instant invention will create (e.g., burn or otherwise write) the initial version on the storage medium according to the previously determined encoding settings **865.** After the initial version has been created (e.g., after the video work has been rendered in the user's preferred format), the instant invention will store the first available alternative version to the storage medium **870.** In this scenario, addition of the source material is under control of the user and will be added if the user has requested it.

Turning next to Figure **9****,** this figure contains a high level overview of a preferred workflow of the instant invention that shows some principal steps and illustrates how it might work without user interaction, i.e., automatically. The process of Figure **9** starts when the user creates a video project within an editor **900** and intends to render or otherwise create a video work from the source material and store it on a storage medium **910.** As a next preferred step, the instant invention will determine the type and storage capacity of the user selected storage medium **920.** In a next preferred step, the instant invention will determine the storage requirements of the rendered project (i.e., the initial version) and the source material **930** that was used to create it. Using the combined storage requirements, the instant invention will render an alternative version of the source material **940,** preferably one that is sized to fit the space remaining on the disk or other storage device. In the next preferred step, the instant invention will store all three versions of the project (e.g., a standard version, a HD version, and the source materials) on the selected storage material **950.**

Depending on the different versions that are to be stored on the disk or other storage device, the instant invention will create a structure that corresponds to the version of the output material that delivers the best quality. For example, if the user instructs the program to store the high definition version and its associated source materials on a disk, the instant invention will preferably create a hybrid data medium with a Blu-Ray® (or similar HD) structure that allows the user to view the stored content in a stand alone Blu-Ray®disk player. if the initial version is a standard definition work, the instant invention will preferably create a data medium with a structure that allows it to be played in a generic DVD player device. Whether the source materials will be playable by a standalone Blu-Ray® disk player or a DVD player depends on the functionality of that device - the source materials will preferably be stored without any particular requirements regarding the structure of the disk. On a personal computer a user will be able to access the high definition material as well as the source material.

Now turning to Figure **10****,** this figure illustrates a prior art approach to the problem which the embodiment of the instant invention is designed to solve. In the prior art, the general workflow when editing digital source material within a single application starts with the storage of content on the personal computer of the user **1000.** As a next step, the user would edit the stored content to create his or her initial version of the project **1010.** Next, the user is required to choose between two different workflows depending on the resolution of the project that is to be written to output. Although the user might be able to create standard definition **1020** as well as high definition **1040** versions from his or her source material (assuming that the source material would classify for the creation of high definition output material), he or she would need to go through at least two different work processes to get the conventional end product, which is the storage of a standard definition version of the project on a storage medium **1030** and the high definition version of the project on a different storage medium **1050**. However, this approach does not allow the user to store at least two different versions of output material on one storage medium nor does the prior art approach provide for storage of the source materials if room permits.

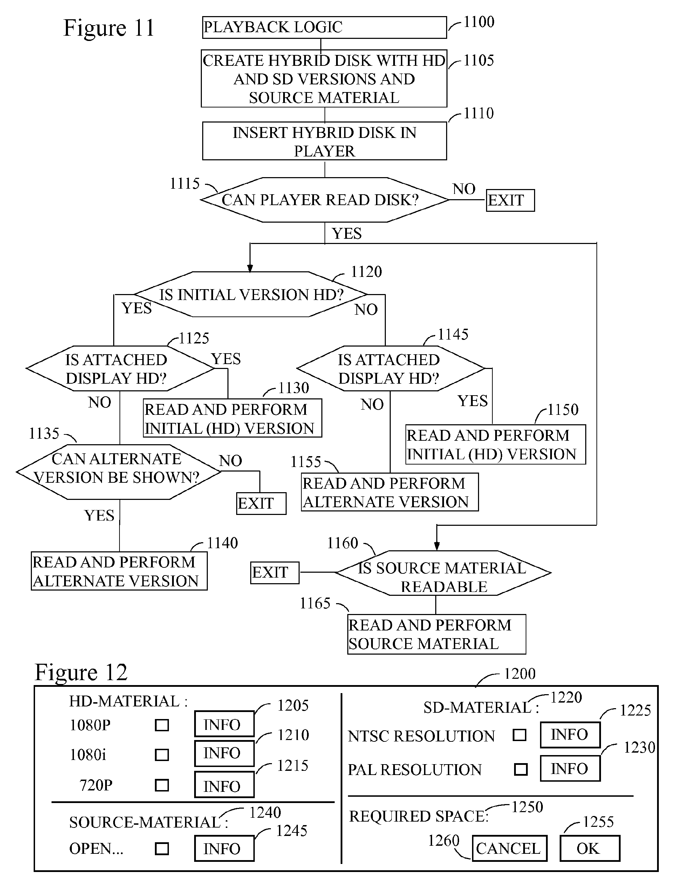

Now turning to Figure **12**, which illustrates a preferred information display suitable for use with the instant invention. In this figure the user has the option to supply the automatic creation process of the multi-version/hybrid storage medium with the information necessary for a successful implementation of the instant invention. Preferably, the displayed graphical user interface would be the last point of user interaction before creating the storage medium. Use of this display will preferably allow the user to quickly determine the storage requirement of different versions of output material. This graphical display will preferably also allow a user to determine which type of storage medium would be required to create the desired combination disk. The information display will preferably allow the user to specify settings and output characteristics for high definition material **1200.** Preferably, the user will be able to choose between three variants of the output material, e.g., 1080p **1205**, 1080i **1210** and 720p **1215**. As is indicated in this figure, next to each selection will preferably be a user control ("INFO") that allows the user to obtain more detailed information about each selectable output version and modify the default settings if desired. Each selection of an output version will preferably lead to a display and calculation of the space required for that particular version in the portion of the GUI that displays the required space **1250**. Additionally, the user will preferably also be able to control the specifics of standard definition material **1220**. For example, the user will preferably be able to choose between NTSC resolution **1225** and PAL resolution **1230**. As was discussed previously, the "INFO" buttons **1225** and **1230** will be provided to allow the user to modify additional parameters of these video types.

Besides the selection of the format of the output, the user will preferably also be able to control the specifics associated with the addition of the source material **1240**. For example, the user will be able to navigate to and open the folder containing the source material **1245**. Additionally, the user will be able to select and de-select output material. Each selection of an output material will preferably lead to a display and re-calculation of the required space of the selection in the appropriate portion of the user interface **1250**. With this user interface, the user will be able to quickly select and control various aspects of the material that is designated for the storage medium. By selection of the "OK" user control **1255**, the user will preferably initiate the disk creation process of the instant invention. The "CANCEL" button **1260** will be designed to allow the user to return to a previous menu without burning a disk.

Finally, Figure **11** illustrates preferred playback logic **1100** suitable for use with the instant invention. As is indicated in this figure, preferably a hybrid disk will have been previously created according to the instant invention. A user will subsequently insert the hybrid disk into a player **1110**. This player might be a DVD player (standard or Blu-Ray) a computer, a video game console, etc.

Next, the player will preferably determine whether or not the disk can be read (step **1115**). If not, the player will typically eject the disk and print an error message on the player's display, if any. This scenario might occur where a Blu-Ray disk is inserted into a standard DVD player. Even if a standard definition video version is also present on the disk, a conventional DVD player will not be able to read it.

If the disk can be read, a determination will preferably be made as to whether the initial version is high definition (step **1120**). If so, a further determination will be made as to whether the attached display is HD or not (step **1125**). If so, the initial (HD) version stored on the disk will preferably be read and displayed (step **1130**). If not, a determination will preferably be made as to whether or not the alternative version can be shown (step **1135**). If not (and this might occur, for example, where the standard definition version is PAL and the attached display is NTSC), the alternative version stored on the disk will not be shown on the attached device. On the other hand, if the alternative version can be shown on the attached device (the "YES" branch of logic branch **1135**) the playback component of the instant invention will preferably read and perform the alternate version (step **1140**).

Returning next to decision item **1120**, following the "NO" branch will preferably result in a determination next of whether the attached display is HD or not (step **1145**). If so, the alternate version stored on the disk will preferably be read and performed on the attached display (step **1155**). However, if the attached device is not HD-compatible, the instant invention will preferably read and perform the initial (i.e., standard definition) version of the work that is stored on the disk. In addition, the player will also preferably determine whether or not the source material is readable **1160** and if that is the case the player device will offer (e.g., via a menu) to read and perform the source material on the attached display **1165**.

### Conclusions

Of course, many modifications and extensions could be made to the instant invention by those of ordinary skill in the art. For example in one preferred embodiment the user might be able to automatically create a storage medium containing a plurality of desired output versions, wherein the creation of the desired output version is based on the storage capacity of a selected storage medium. So the user might select the storage medium and depending on the available storage capacity on the storage medium the instant invention would create the output versions, thereby taking into account thresholds defining quality features. Additionally it might be possible to integrate global preference settings which favor specific versions of the output material, so that for example the generation of a 1080p version of the output material will automatically receive the majority of the available space and therewith will be created with the best possible quality.

Those of ordinary skill in the art will recognize that the instant invention is suitable for use with many different removable storage devices including, without limitation, DVD, CDV, DVD-5, DVD-9, Blu-Ray® 25, and Blu-Ray®50, flash drive, memory stick, etc.

Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made therein by those skilled in the art, without departing from the spirit of the inventive concept the scope of which is to be determined by the following claims.

## Claims

1. A method of creating a hybrid video medium, comprising the steps of:
(a) creating a video project, said video project containing at least one item of source material;
(b) creating a standard definition digital video work from said video project, said standard definition video work containing therein a representation of said at least one item of source material;
(c) creating a high definition digital video work from said video project, said high defmition video work containing therein a representation of said at least one item of source material; and,
(d) writing to a removable storage medium said standard definition video work, said high definition video work, and said at least one of said at least one item of source material, thereby creating a hybrid video medium.

2. The method of creating a hybrid video medium according to Claim 1, further comprising the steps of:
(e) reading at least a portion of either said standard definition digital video work, said high definition digital video work, or said at least one item of source material from said removable storage medium; and,
(f) displaying on a display device anything so read.

3. The method of creating a hybrid video medium according to Claim 1, further comprising the steps of:
(e) reading at least a portion of said high definition digital video work from said removable storage medium; and,
(f) displaying on a high definition display device anything so read.

4. The method according to Claim **1**, said standard definition digital video work has a format selected from a group consisting of NTSC and PAL.

5. The method according to Claim **1**, said high definition digital video work has a format selected from a group consisting of 1080i, 1080p, and 720p.

6. The method according to Claim **1** wherein said video work is created from a plurality of source items and wherein each of said plurality of source material items is written to said removable storage medium.

7. A device for use in the playback of a video work, comprising:
(a) a removable storage medium for use in a video playback device, containing written thereon
(1) a standard definition representation of said video work readable by said video playback device,
(2) a high definition representation of said video work readable by said video playback device, and
(3) at least one source item used to create said video work, readable by said video playback device

8. The device according to Claim 7, wherein said removable storage medium is selected from a group consisting of a DVD disk, a CDV disk, and, a Blu-Ray® disk.

9. The device of Claim **7**, wherein said standard definition representation of said video work has a format selected from a group consisting of NTSC and PAL.

10. The device of Claim **7**, wherein said high definition representation of said video work has a format selected from a group consisting of digital video work has a format selected from a group consisting of 1080i, 1080p, and 720p.

11. The device of Claim **7**, wherein video project contains a plurality of source items and wherein each of said plurality of source items used to create said video work is written to said removable storage medium.

12. The device of Claim **7**, wherein said video playback device is selected from a group consisting of a DVD player, a Blu-Ray player, and a computer optical disk reader.

13. A method of creating a hybrid video medium, comprising the steps of:
(a) creating a video project, said video project containing at least one item of source material;
(b) creating a standard definition digital video work from said video project;
(c) creating a high definition digital video work from said video project;
(d) determining a capacity of a removable storage medium;
(e) selecting a first video work from among said standard definition digital video work and said high definition digital video work;
(f) determining a size of said first video work;
(g) selecting a second video work from among said standard definition digital video work and said high definition digital video work, wherein said second video work is different from said first video work;
(h) determining a size of said second video work;
(i) determing a size of said at least one item of source material;
(j) writing said first video work to said removable storage medium;
(k) if said capacity of said removable storage medium is greater than or equal to said size of said first video work plus said size of said second video work, writing said second video work to said removable storage medium;
(l) if said capacity of said removable storage medium is greater than or equal to said size of said first video work plus said size of said second video work plus said size of said at least one item of source material, writing said at least one item of source material to said removable storage medium;
(m) if said capacity of said removable storage medium is less than said size of said first video work plus said size of said second video work,
(i) if said capacity of said removable storage medium is greater than or equal to said size of said first video work plus said size of said at least one item of source material, writing said at least one item of source material to said removable storage medium;
(n) reading at least a portion of said removable medium; and,
(o) displaying on a video display device any of said removable medium so read.

14. The device according to Claim 13, wherein said removable storage medium is selected from a group consisting of a DVD disk, a CDV disk, and, a Blu-Ray® disk.

15. The method according to Claim **13**, said standard definition digital video work format has a format selected from a group consisting of NTSC and PAL.

16. The method according to Claim **13**, said high definition digital video work has a format selected from a group consisting of 1080i, 1080p, and 720p.

17. The method according to Claim **13**, wherein said video display device is selected from a group consisting of a standard definition TV, a high definition TV, and a computer monitor.

18. A method of creating a hybrid video medium, comprising the steps of:
(a) creating a video project, said video project containing at least one item of source material;
(b) creating a first video work from said video project in a first video format, said first video work containing therein a representation of said at least one item of source material;
(c) determining a storage capacity of a removable storage medium;
(d) determining a size of said first video work;
(e) selecting at least one of said at least one item of source material;
(f) determining a total size of said selected at least one item of source material;
(g) writing said first video work to said removable storage medium;
(h) writing said selected at least one item of source material to said removable storage medium;
(i) determining at least an approximate storage capacity remaining of said removable storage medium;
(j) selecting a second video format, said second video format having at least one parameter associated therewith;
(k) using at least said storage capacity remaining to select a parameter value for at least one of said at least one parameter, thereby selecting at least one parameter value;
(l) creating a second video work from said video project in said second video format according to said at least one parameter value, said second video work containing therein a representation of said at least one item of source material;
(m) determining a size of said second video work;
(n) if said size of said second video work is less than or equal to said capacity remaining on said removable storage medium, writing said second video work to said storage medium; and,
(o) if said size of said second video work is greater than said capacity remaining on said removable storage medium, performing at least steps (k) through (m) with different parameter values until said size of said second video work is less than or equal to said capacity remaining on said removable storage medium and writing said second video work to said storage medium, thereby creating a hybrid video medium.
